# DEMANDE DE BREVET EUROPEEN

(11) **EP 2 045 340 A1**
(43) Date de publication de la demande: **08.04.2009**
(21) Numéro de dépôt: 07018793.5
(22) Date de dépôt: 25.09.2007
(51) Int. Cl.: C21D 1/42, C21D 9/60, F27B 9/06, F27D 11/06, H05B 6/02, C21D 9/46, C21D 9/54, C21D 8/12

(54) **Culasse feuiletee refendue en peigne pour inducteur a champ magnetique traversant de rechauffage de bandes metalliques**

(71) Demandeur: ArcelorMittal France, 93200 Saint-Denis (FR)
(72) Inventeur: Anderhuber, Marc, 57140 Saulny (France) (FR); Daubigny, Alain, 54190 Villerupt (FR)
(74) Mandataire: Plaisant, Sophie Marie

(57) **Abrégé**

Culasse formée par empilage de tôles magnétiques feuilletées 4 qui présentent des entailles de bord 7, parallèles entre elles et à lèvres ouvertes, localisées au moins aux extrémités anguleuses de l'inducteur.

Ces entailles sont préférentiellement espacées entre elles de quelques mm, mais l'intervalle de séparation peut être plus conséquent, de 1 cm et au delà, sans toutefois dépasser les 5 cm environ. Elles s'initient en bordure de feuille et se prolongent, de préférence en ligne droite, vers l'intérieur sur une distance qui dépend de l'environnement de l'inducteur. Elles sont réalisées par enlèvement de matière afin que chaque entaille 7 présente des lèvres non jointives (à lèvres ouvertes donc), même ponctuellement de préférence, afin d'éviter d'offrir des pontages à la circulation de courants de Foucault à leur endroit.

L'invention s'applique à la réalisation d'inducteurs de chauffage dont elle procure la maîtrise de la thermique des inducteurs par des moyens simples empêchant leur échauffement.

## Description

La présente invention a trait au chauffage rapide par induction de bandes métalliques à l'état solide, notamment en acier, défilant en continu. Elle concerne plus particulièrement la réalisation de la culasse magnétique en tôles feuilletées constitutives des inducteurs de chauffage concernés.

Pour limiter les échauffements des inducteurs, il est habituel de réaliser leur culasse en un empilage de tôles magnétiques feuilletées et électriquement isolées les unes par rapport aux autres. Le feuilletage, orienté selon la direction du champ magnétique produit par l'inducteur, empêche la formation de courants de Foucault dans des plans perpendiculaires. Les tôles sont d'ailleurs elles-mêmes suffisamment fines pour que des courants de Foucault ne puissent s'y développer selon l'épaisseur de manière significative. De tels courants parasites sont en effet à prohiber, au risque sinon de devoir refroidir la culasse bien plus intensément de ce qui serait suffisant pour compenser l'apport calorifique provenant de la pièce à chauffer elle-même, afin de maintenir l'inducteur à un niveau en température compatible avec sa bonne tenue dans le temps.

En règle générale, le feuilletage de la culasse suffit à la maîtrise du niveau thermique des inducteurs de chauffage habituels. Il se trouve cependant que, dans certains cas, le refroidissement prévu (convection naturelle, ventilateurs...) ne suffise plus et qu'il faille alors envisager des systèmes d'extraction forcée de la chaleur, faisant appel par exemple à des caloducs ou à un changement de phase du fluide caloporteur, voire à la cryogénie, systèmes, plus ou moins sophistiqués, qui ne sont pas toujours compatibles avec les contraintes économiques liées à l'opération de chauffage inductif à réaliser. C'est le cas notamment des inducteurs puissants à champ magnétique dit "traversant" que l'on doit construire de nos jours pour réaliser des allures de chauffage très rapides, de plusieurs centaines de degrés Celsius en quelques secondes. Un exemple d'application qui se développe actuellement est celui du chauffage inductif de bandes d'acier en défilement rapide (de l'ordre de plusieurs centaines de mètres par minute) au sein d'une ligne de recuit continu, l'inducteur étant alors constitué de deux demi-parties planes appariées, placées en regard et à faible distance l'une de l'autre de manière à ménager entre elles un entrefer-couloir à champ magnétique intense pulsant dans lequel passe la bande à chauffer.

Toutefois, une analyse minutieuse des origines et des causes des surchauffes intrinsèques (rayonnement thermique reflex en retour de la part du produit chauffé exclu) menée dans les laboratoires du Demandeur a permis de poser des solutions technologiques simples et rustiques, à coût de fonctionnement nul ou quasi-nul permettant de se satisfaire des moyens de refroidissement habituels de l'inducteur pour assurer son maintien thermique à un niveau en température satisfaisant, dans la plupart des cas.

A cet effet, l'invention a pour objet une culasse d'inducteur de chauffage à champ magnétique traversant de structure générale plane, formée par empilage de tôles magnétiques feuilletées, **caractérisée en ce que** lesdites tôles constitutives de la culasse présentent des entailles de bord, parallèles entre elles et à lèvres ouvertes, localisées au moins aux extrémités anguleuses de l'inducteur.

Ces entailles sont préférentiellement espacées entre elles de quelques mm, mais l'intervalle de séparation peut être plus conséquent, de 1 cm et au delà, sans toutefois dépasser les 5 cm environ, au risque sinon de perdre l'efficacité attendue. Elles s'initient en bordure de feuille et se prolongent, de préférence en ligne droite, vers l'intérieur sur une distance, de quelques cm à quelques dm, qui dépend de l'environnement de l'inducteur. Elles sont réalisées par enlèvement de matière afin que chaque entaille présente des lèvres non jointives (à lèvres ouvertes donc), et de préférence sans contact mutuel même ponctuel, afin d'éviter d'offrir des pontages à la circulation de courants de Foucault à leur endroit.

Comme on l'aura compris, l'invention réside donc dans une culasse magnétique, classiquement destinée à canaliser les lignes de force du champ magnétique dans un inducteur de chauffage qui le produit, culasse réalisée par empilage de tôles magnétiques partiellement fendues en périphérie, en remplacement des tôles pleines habituelles.

La culasse conserve ainsi son rôle premier de concentrateur du champ magnétique et évite aux courants induits de se développer dans toutes les directions, supprimant ainsi tout échauffement parasite, rendant du coup l'utilisation de l'inducteur bien plus aisée.

Il a en effet été observé que le principe classique de constitution des culasses magnétiques en tôles feuilletées à feuilletage orienté selon la direction du champ magnétique incident produit par les enroulements électriques de l'inducteur, fonctionne bien lorsque cette direction est connue, stable et bien maîtrisée, à savoir précisément dans la direction parallèle à celle du feuilletage. Il existe cependant des configurations magnétiques dans lesquelles le champ magnétique ne présente pas partout la même direction de propagation de ses lignes de force dans l'espace qu'il occupe. Ainsi, aux extrémités anguleuses de l'inducteur, là où ce dernier est généralement au plus près de son environnement matériel externe, le champ magnétique peut parfois revenir reboucler sur la tranche de la culasse après avoir naturellement emprunté les chemins de moindre reluctance parmi ceux qui lui sont offert. Dans le cas des inducteurs à puissance de chauffage élevée, (l'invention a été faite pour eux initialement), les courants parasites induits, lesquels se développent alors en pleine face des feuilles de la culasse, peuvent dans ces conditions provoquer de fortes surchauffes locales limitant ainsi l'utilisation de l'inducteur, alors que son niveau thermique moyen demeure pourtant parfaitement compatible avec un état de fonctionnement normalisé durable.

De telles surchauffes locales sont évitées grâce aux moyens de l'invention qui consistent simplement en des entailles périphériques ouvertes à bords non jointifs ménagées dans les feuilles constitutives des tôles magnétiques de la culasse au moins aux endroits de celle-ci où ces surchauffes sont à redouter.

Les éventuelles surchauffes locales ont en effet pour origine une topologie spatiale singulière des lignes de force du champ magnétique venant des propriétés magnétiques de l'environnement matériel immédiat de l'inducteur en ces endroits particuliers (bouclage selon une direction plus ou moins perpendiculaire aux grandes faces des tôles).

Les entailles de l'invention, parallèles et espacées, et ouvertes, car menées depuis le bord des tôles, confèrent donc à la culasse une forme de peigne aux endroits où ces échauffements parasites limiteraient sinon l'utilisation de inducteur.

L'invention sera bien comprise et d'autres aspects et avantages ressortiront plus clairement au vu de la description qui suit donnée en référence à la planche unique de dessins annexée sur laquelle:
- la figure 1 montre schématiquement une portion d'une culasse magnétique classique située à une extrémité anguleuse d'un inducteur de chauffage plan à champ magnétique de type "traversant":

- la figure 2 est un schéma analogue à celui de la figure 1 mais montrant une culasse aménagée avec les moyens de l'invention.

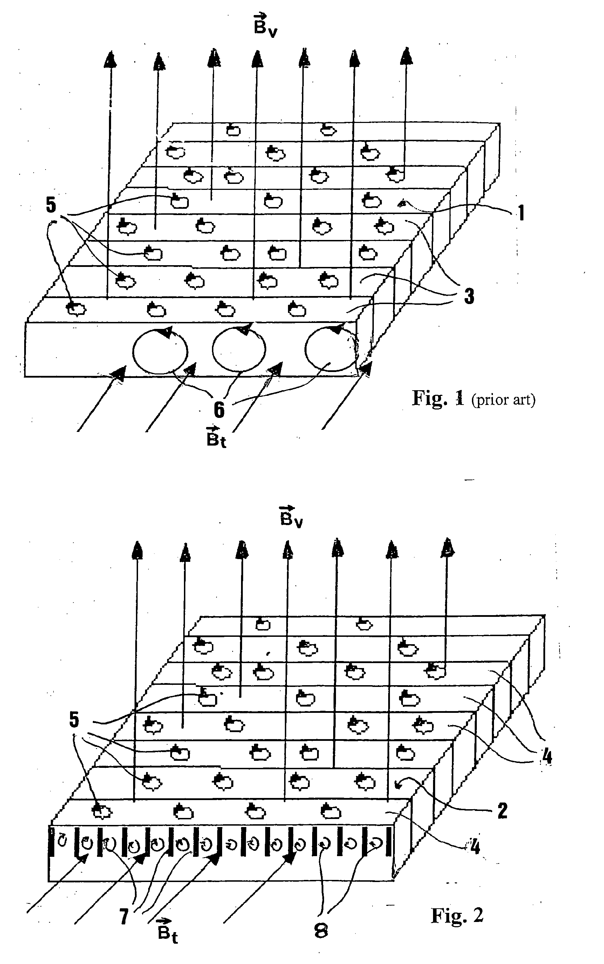

Comme on peut le voir sur la figure 1, les lignes de forces Bv, que l'on admettra verticales pour simplifier, sont les lignes de forces principales du champ magnétique produit dans l'entrefer plan horizontal de l'inducteur (non montré sur la figure). Elles représentent donc un champ de force magnétique homogène et bien maîtrisé, tant en intensité qu'en topologie spatiale, car contrôlé et piloté par l'inducteur lui-même.

La culasse 1, formée par empilement de tôles d'acier magnétique 3, est feuilletée dans le sens de propagation de ce champ Bv. Cette disposition, destinée à créer des discontinuités métalliques, permet d'éviter la formation de courants de Foucault au sein de la culasse dans le plan de l'entrefer, qui est donc le plan perpendiculaire à Bv. Grace à cette disposition, seules sont admises à s'y former des boucles sur tranche, c'est à dire des boucles 5 de circulation de courants induits selon l'épaisseur des tôles, donc petites et peu énergétiques.

Cependant, il peut arriver que d'autres boucles de circulation 6 de courant parasites soient générées dans le plan même des tôles. Ces boucles sont bien plus énergiques que les précédentes et l'effet Joule qui en résulte est autrement plus conséquent sur l'échauffement de la culasse, car c'est alors toute la surface des tôles qui est offerte pour servir de siège à l'établissement de ces courants électriques parasites. Cette situation advient lorsque des lignes de force Bt du champ magnétique incident produit par l'inducteur se retrouvent, intégralement ou du moins selon composante importante, orientées dans une direction perpendiculaire à Bv, donc dirigées, comme on le voit sur la figure, perpendiculairement au plan du feuilletage. Ceci peut survenir si l'inducteur est placé à proximité immédiate (donc généralement des angles de la culasse) d'un environnement présentant des propriétés magnétiques à forte anisotropie apte à "capturer" une fraction des lignes de champ verticales Bv et la canaliser selon un circuit de retour sur la culasse en leur donnant une orientation Bt majoritairement horizontale, donc perpendiculaire au plan des feuilles 3.

C'est le cas, lorsque des infrastructures et/ou superstructures métalliques lourdes sont nécessaires, si ce n'est pour supporter et maintenir en position stable un ou plusieurs inducteurs massifs et puissants, comme le sont précisément les inducteurs de structure plane à champ magnétique traversant destinés au chauffage rapide de tôles métalliques en défilement rapide, par exemple dans un four de recuit continu de bandes d'acier.

Comme le montre la figure 2, pour palier les fâcheuses conséquences thermiques d'une telle situation sur l'inducteur, l'invention consiste simplement à ménager des entailles de bord 7 dans les tôles de la culasse (notées à présent 4 pour les différencier des tôles pleines classiques 3 de la fig. 1). Dès lors, des discontinuités métalliques complémentaires sont réalisées qui ne laissent aux courants induits la possibilité de se former et de s'épanouir que dans les espaces exigus disponibles entre les entailles. Par exemple, si les entailles sont distantes l'une de l'autre d'une valeur égale ou voisine de l'épaisseur des tôles 3 (soit de 1 à 4 mm environ) les boucles 8 de courants parasites de pleine face qui pourront se développer seront du même type et donc aussi peu énergétiques que les boucles sur tranche 5, ce qui se traduira par une baisse conséquente de l'échauffement de l'inducteur. L'expérience montre qu'un résultat significatif sur la thermique de l'inducteur pourra être obtenu avec des espacements entre entailles qui peuvent aller jusqu'à 5 cm, même si les résultats les meilleurs sont atteints avec des distances de 1 cm, et moins, bien entendu.

Elles s'initient en bordure de feuille et se prolongent, de préférence en ligne droite, vers l'intérieur sur une distance, de quelques cm à quelques dm, qui dépend de l'environnement de l'inducteur.

Elles sont réalisées par enlèvement de matière, par simple découpe à la scie circulaire par exemple, afin que chaque entaille présente des lèvres non jointives (dites à lèvres ouvertes), et de préférence sans contact mutuel, même ponctuel, afin d'éviter d'offrir des pontages à la circulation de courants de Foucault à leur endroit.

## Revendications

1. Culasse d'inducteur de chauffage à champ magnétique traversant de structure générale plane, formée par empilage (2) de tôles magnétiques feuilletées (4), **caractérisée en ce que** lesdites tôles (4) constitutives de la culasse magnétique (1) présentent des entailles de bord (7), parallèles entre elles et à lèvres ouvertes, localisées au moins aux extrémités anguleuses de l'inducteur.

2. Culasse selon la revendication 1, **caractérisée en ce que** lesdites entailles (7) sont préférentiellement espacées entre elles de quelques mm et plus, sans excéder 5 cm.

3. Culasse selon la revendication 1 ou 2, **caractérisée en ce que** lesdites entailles (7) s'initient en bordure de feuille.

4. Culasse selon la revendication 1, **caractérisée en ce que** lesdites entailles (7) sont réalisées par enlèvement de matière afin que chaque entaille présente des lèvres ouvertes.
